# EUROPEAN PATENT SPECIFICATION

(11) **EP 3 974 315 B1**
(45) Date of publication and mention of the grant of the patent: **14.02.2024**
(21) Application number: 20198570.2
(22) Date of filing: 26.09.2020
(51) Int. Cl.: B64C 29/00, B64C 27/28, B64C 29/02

(54) **VERTICAL TAKEOFF AND LANDING AIRCRAFT**
VERTIKAL STARTENDES UND LANDENDES FLUGZEUG
AÉRONEF À DÉCOLLAGE ET À ATTERRISSAGE VERTICAUX

(43) Date of publication of application: 30.03.2022
(73) Proprietor: Zuri.com SE, 14000 Praha 4 (CZ)
(72) Inventor: Illich, Michal, 14700 Praha 4 (CZ); Kapoun, Tomas, 75201 Kojetin (CZ)
(74) Representative: Hartvichova, Katerina

(56) References cited:
- EP-A1- 3 409 587
- WO-A1-2019/062257
- CN-A- 101 643 116
- CN-A- 103 448 910
- US-A- 3 083 936
- US-A1- 2007 018 035
- US-A1- 2018 065 741
- UGUR OZDEMIR ET AL: "Design of a commercial hybrid VTOL UAV system", UNMANNED AIRCRAFT SYSTEMS (ICUAS), 2013 INTERNATIONAL CONFERENCE ON, IEEE, 28 May 2013 (2013-05-28), pages 214-220, XP032438996, DOI: 10.1109/ICUAS.2013.6564693 ISBN: 978-1-4799-0815-8

## Description

### Technical field

The present invention relates to a vertical takeoff and landing aircraft bearing a combination of ducted fans and open propellers.

### Background Art

Vertical takeoff and landing aircrafts (VTOLs) are aircrafts which can hover, take off and land vertically. First VTOLs (primitive helicopters) flew in the beginning of the 20th century, and many constructions of VTOLs have been proposed since.

Non-helicopter VTOLs typically have a fuselage, at least one wing, and use propellers, tilting propellers or jet lifts for powering the flight. The propellers or tilting propellers may have the form of open propellers or ducted fans. Several known types of constructions of VTOLs equipped with ducted fans and/or open propellers are briefly summarized herein below.

VTOLs described for example in CN 106314789, WO 2016/009376, WO 2018/078386 or Ozdemir U. et al. "Design of a Commercial Hybrid VTOl UAV System" (proceedings of 2013 International Conference on Unmanned Aircraft Systems, page 214) are equipped with ducted fans provided in the wing of the aircraft, the vertical flight is powered only by these ducted fans. The horizontal flight is powered by open propellers arranged on the fuselage in pull or push configuration. Such configuration results in too high disc loading and thus in a reduced efficiency of the vertical flight.

Other types of VTOL use only open propellers mounted on pylons/booms, an example of such construction being US 10,365,036. Typical problems of such constructions include high drag in horizontal flight (and thus reduced lift to drag ratio) and safety issues to staff during take-off and landing.

US 2007/0018035 A1, GB 1172782 or US 2003085319 show a VTOL provided with ducted fans in the wing and additional tiltable ducted fans mounted on the fuselage. However, the tiltable ducted fans mounted on the fuselage produce significant drag in the horizontal flight which translates into high energy needs and high fuel costs.

The present invention aims to overcome the above mentioned drawbacks of the known VTOL constructions and to provide a VTOL aircraft having a significantly better lift to drag ratio, high efficiency of flight performance and lower energy consumption,

### Disclosure of the Invention

The present invention overcomes the drawbacks of the prior art by providing a vertical takeoff and landing aircraft having a fuselage ending with a tail, a wing fixedly attached to the fuselage, and at least two pylons attached to the wing and oriented substantially in parallel with horizontal flight direction, wherein
- at least four non-tiltable ducted fans are provided in the wing, said non-tiltable ducted fans are configured to power vertical flight and to be closed during cruise flight;
- a tiltable open propeller is provided on each pylon, said tiltable open propeller being located forwards of the leading edge of the wing;
- at least one additional vertical flight powering means, selected from an open propeller and a non-tiltable ducted fan, is provided in the fuselage or on the pylons or on the tail, wherein the at least one additional vertical flight powering means is positioned behind the trailing edge of the wing.

Tiltable open propellers are tiltable between a first position with an axis of rotation of the propeller substantially parallel with the pylons (cruise flight powering position) and a second position with an axis of rotation of the propeller substantially perpendicular to the plane of the wing (vertical flight powering position). This allows the tiltable open propellers to be used to power cruise flight, as well as to provide additional thrust in vertical flight, as needed. The use of tiltable open propellers results in a lower total weight of the aircraft, due to their usability as sources of vertical thrust in the front quandrants as well as sources of horizontal thrust in cruise flight, thus avoiding the need for two separate powering means. The tiltable open propellers are configured to power cruise flight and to power vertical flight. In the first position, the tiltable open propellers power cruise flight, and in the second position, the tiltable open propellers power vertical flight.

The term "configured to power cruise flight" refers to the propeller which is configured or arranged or mounted so that it can take up a position with an axis of rotation of the propeller substantially parallel with the pylons (cruise flight powering position).

The term "configured to power vertical flight" refers to the propeller or fan which is configured or arranged or mounted so that it can take up a position with an axis of rotation of the propeller perpendicular to the plane of the wing (vertical flight powering position).

The additional vertical flight powering means are means (propeller(s) and/or ducted fan(s)) which are configured to power vertical flight.

The term "non-tiltable" means that the ducted fans or propellers are mounted fixedly in a specific position and cannot be tilted from this position into any other position.

The term "tilting" or "tiltable" refers to movability of the open propeller from a cruise flight powering position to a vertical flight powering position and vice versa.

The term "horizontally arranged" means that the ducted fans or open propellers are mounted so that the axis of rotation of the propellers or fans is substantially perpendicular to the plane of the wing (wing plane).

The terms "forwards", "aft", "behind" are used relative to the horizontal flight direction.

In this text, the term "vertical flight" means a flight in a direction which is substantially perpendicular to the ground, i.e., a flight in a vertical direction. Typically, vertical flight is used for take off, hover and landing.

The term "cruise flight" means a flight in other than vertical direction. Typically, a cruise flight is a substantially horizontal flight in a given altitude. A cruise flight may include changes in heading of the flight.

The term "horizontal flight" refers to a flight in a given altitute with changes of heading and speed only.

The term "take-off" refers to a phase of the flight in which the aircraft gets airborne, i.e., from lifing off the ground to safe altitude. The take-off phase of a VTOL typically corresponds to a vertical flight.

The term "landing" refers to a phase of flight in which the aircraft comes to land. The landing phase includes manoeuvering to land and the touch-down instant. The landing phase of a VTOL typically corresponds to a vertical flight.

The term "climb" refers to a phase of flight in which the aircraft is increasing its altitude. This flight phase typically follows the take-off and precedes the horizontal flight, or may be in between two phases of horizontal flight in different altitudes.

The term "descent" refers to a phase of flight in which the aircraft is decreasing its altitude. This flight phase typically follows the horizontal flight and precedes the landing, or may be in between two phases of horizontal flight in different altitudes.

The vertical take-off and landing aircraft according to the present invention operates generally in five flight modes, depending on the phase of the flight:
- during vertical take-off, ducted fans, tiltable open propellers in the second position and additional vertical flight powering means generate thrust in the vertical direction to increase the altitude of the aircraft;
- in transition from the vertical take-off to cruise flight or to horizontal flight, the vertical propulsion by both ducted fans and additional vertical flight powering means is gradually tuned down as the airspeed in the horizontal direction increases, and the tiltable open propellers are gradually tilted from the second position to the first position;
- during cruise flight, the ducted fans and the additional vertical flight powering means are turned off. The ducted fans are closed, open propellers used solely for vertical flight (if any) are turned off and aligned paralel to the flight direction to minimize drag. The tiltable open propellers are in the first position and power the horizontal or cruise flight;
- in transition from cruise flight to vertical flight, the vertical propulsion by both ducted fans and the additional vertical flight powering means is gradually tuned up as the airspeed in the horizontal direction decreases. The tiltable open propellers are gradually tilted from the first position to the second position,
- during the vertical landing phase, ducted fans, tiltable open propellers in the second position and additional vertical flight powering means generate a vertical thrust to decrease the altitude of the aircraft until it safely lands.

These flight modes generally occur in the order in which they are described, but the aircraft is capable of transition between these flight modes repeatedly within one flight, and the aircraft can also hover in the air, which is a vertical flight mode where the altitude is kept constant.

As described, the tiltable open propellers are tilted as appropriate between the first position with an axis of rotation of the propeller parallel with the pylons - this position serves to power the cruise flight; and the second position with an axis of rotation of the propeller perpendicular to the plane of the wing - this position serves to power the vertical take-off or landing. In the transitions, the tiltable open propeller is gradually tilted from one position to the other position, thus allowing to make the transition smoother.

The term "fuselage" refers to the main body section of the aircraft. The fuselage usually holds pilot and passengers or cargo.

In this invention the fuselage is preferably positioned under the wing, i.e., the wing is attached to the upper portion (top) of the fuselage. However, the fuselage may also be positioned above the wing, i.e., the wing may be attached to the lower portion (bottom) of the fuselage.

Any shape, material and construction of the fuselage known for VTOL aircrafts can be used in the present invention. Particularly advantageous material for the fuselage is carbon fibre composite which is lightweight and has excellent stress characteristics. A particularly advantageous type of the fuselage is monocoque.

When this text refers to a "longitudinal axis" of the fuselage, the axis of the fuselage which extends along the largest dimension is meant. This is the axis which typically extends from nose to the tail of the aircraft.

The term "wing" refers to a fin-like structure producing lift. In this text, the structure extending from a first wingtip to a second wingtip is considered to be one wing. In other words, a wing extends to both sides of the fuselage. A wing has a leading edge and a trailing edge.

When this text refers to a "longitudinal axis" of the wing, the axis of the wing which extends along the largest dimension is meant. This is the axis which typically extends from a first wingtip to a second wingtip.

In the present invention, the aircraft is provided with at least one wing within which ducted fans are integrated. In some embodiments more than one wing can be present. The additional wings may or may not contain ducted fans. The minimum total number of ducted fans within the aircraft is four.

A "pylon" is a longitudinal body attached to the wing (typically to the underside of the wing), which may carry components of the aircraft. In this invention, a pylon usually carries open propellers.

The pylons are oriented substantially in parallel with horizontal flight direction. This corresponds to the orientation of the pylons substantially perpendicularly to the longitudinal axis of the wing and to the orientation of the pylons substantially in parallel with a plane which contains the longitudinal axis of the fuselage and is perpendicular to the longitudinal axis of the wing.

Typically, each pylon carries one tiltable open propeller mounted on the tip of the pylon forwards of the leading edge of the wing. Each pylon may or may not carry further open propeller(s).

The pylons may be arranged under the wing, and/or in the plane of the wing, and/or on the wingtip.

At least one first pylon is arranged on a first side of the wing, relative to the fuselage, and at least one second pylon is arranged on a second side of the wing, relative to the fuselage. As a result, the fuselage is between the pylons. When only two pylons are present, usually the distance of each pylon from the fuselage is the same. When more than two pylons are present, they are usually arranged symmetrically around the fuselage, i.e., the pylons arranged on one side of the wing from the fuselage are in the same distances from the fuselage as the pylons arranged on the other side of the wing from the fuselage.

Preferably, the VTOL of the invention is provided with at least four pylons.

Preferably, the pylons do not extend behind the trailing edge of the wing. This translates into better aerodynamic properties which in turn result into lower demands on energy needed for powering the aircraft.

When the pylons carry additional vertical flight powering means located behind the trailing edge of the wing, it is preferred when the portion of the pylons extending behind the trailing edge of the wing is as short as possible, i.e., just sufficiently long for mounting of the additional vertical flight powering means. This ensures good aerodynamic properties.

The term "ducted fan" refers to a structure used to propel the aircraft vertically, and comprising a mechanical fan (propeller) mounted within a cylindrical duct (shroud). The presence of the duct reduces losses of thrust from the tips of the blades of the fan.

In this invention, at least four ducted fans are arranged horizontally within the wing, i.e., the axes of rotation of the fans are substantially perpendicular to the wing, and the cylindrical ducts are integrated within the wing.

In some embodiments, the proportion of the total area of the ducted fans integrated within the wing(s), relative to the total area of the wing(s), is in the range of 15 to 50 %.

Preferably, the proportion of the total area of the ducted fans integrated within the wing(s), relative to the total area of the wing(s), is at least 20 %.

During cruise flight, ducted fans are closed. Apparatuses and configurations for closing ducted fans during flight are known in the art. Several constructional variants of closing of the ducted fans are known. Examples include a construction based on louver system, or a construction based on halving the hatch into two parts, attached to the edge of the fan.

It is preferred that the ducted fans integrated within the wing are arranged within the wing substantially in one line along the wingspan.

The total number of ducted fans is at minimum 4, but can be higher. Preferably, the amount of ducted fans in the wing is an even number, such as 4, 6, 8, 10. More preferably, the total number of ducted fans is 6.

The term "open propeller" refers to a structure used to propel the aircraft and comprising a mechanical fan (propeller) which is not mounted in any housing. Generally, open propellers may be tiltable or non-tiltable. In the present invention, at least two open propellers mounted on pylons and located forwards of the leading edge of the wing are tiltable.

The aircraft of the invention preferably has two tiltable open propellers mounted on pylons and located forwards of the leading edge, or four tiltable open propellers mounted on pylons and located forwards of the leading edge.

The VTOL aircraft of the invention further contains one or more additional vertical flight powering means. Each additional vertical flight powering means may be an open propeller or a non-tiltable ducted fan. The said at least one additional vertical flight powering means is/are provided on the fuselage or on the pylons or on the tail. The location of the additional vertical flight powering means behind the trailing edge ensures that the vertical thrust is provided in all quadrants of the aircraft.

In some embodiments, the additional vertical flight powering means may be at least one non-tiltable ducted fan integrated within the fuselage and/or at least one open propeller (tiltable or non-tiltable) provided on each pylon and/or an open propeller (tiltable or non-tiltable) located on the tail.

In particular embodiments, when the additional vertical flight powering means is at least one non-tiltable ducted fan integrated within the fuselage, the at least one non-tiltable ducted fan is/are integrated symmetrically about the longitudinal axis of the fuselage. Such additional ducted fan(s) is/are arranged horizontally so that the axis of rotation of the fan is substantially perpendicular to the wing plane, and the cylindrical duct of the ducted fan is integrated within the fuselage (typically within a rear or tail part of the fuselage).

In particular embodiments, the additional vertical flight powering means are non-tiltable open propellers provided on each pylon.

In particular embodiments, the additional vertical flight powering means is a tiltable or non-tiltable open propeller provided on the tail of the aircraft (in a push configuration).

Combination of ducted fan(s) and open propeller(s) as additional vertical flight powering means is possible.

In some embodiments, further additional flight powering means may be provided, which are located forwards of the leading edge of the wing. The further additional flight powering means may have the form of an open propeller on the nose of the aircraft (in a pull configuration, for powering the cruise flight) and/or at least one open propeller provided on each pylon forwards of the leading edge of the wing (typically configured for powering the vertical flight, usually non-tiltable and located between the tiltable open propellers and the leading edge of the wing).

Preferably the ducted fans and the open propellers are positioned symmetrically about the plane which contains the longitudinal axis of the fuselage and is perpendicular to the longitudinal axis of the wing.

The combination of the ducted fans integrated in the wing with the tiltable open propellers provided on pylons results in a particularly effective construction of a VTOL aircraft, with low energy consumption requirements.

In comparison with the prior art VTOL aircrafts relying on the vertical movement propelled only by ducted fans provided in the wing(s), the vertical movement in the present invention is propelled by the combination of ducted fans and open propellers.

Below we provide an example calculation where the propeller efficiency is estimated using blade element theory. It can be calculated that for VTOLs relying only on ducted fans for vertical movement powering, for an example of 22 m² of wing area, ducted fans might have a total area of 7.6 m² (assuming they take up to 80 % of wing depth, have circular shape, have a sufficient spacing between themselves and leave outer parts of the wing unobstructed to be still able to generate lift).

If, for example, 2000 kg needs to be lifted solely by these ducted fans, it corresponds to the needed lift of 2000/7.6 = 263 kg/m², which is a rather high disc loading. That would require around 518 kW to power the hover flight.

Adding two tiltable open propellers as proposed in the present invention, for example with 1,8 m diameter, adds another 5.1 m² of propeller area, which allows to lower the disc loading (because the same weight is distributed across larger total propeller area) to 157 kg/m² on average (2000 kg divided by 7.6+5.1 m²) which is 40 % lower than the mentioned aircraft which uses only ducted fans for powering the vertical flight. This translates to better energy efficiency. To be specific, when assuming the same thrust for each ducted fan and open propeller, it is 277 kW for the ducted fans and 177 kW for the open propellers. The sum is 454 kW, which is 12.4 % lower than the aircraft which powers vertical flight solely by ducted fans.

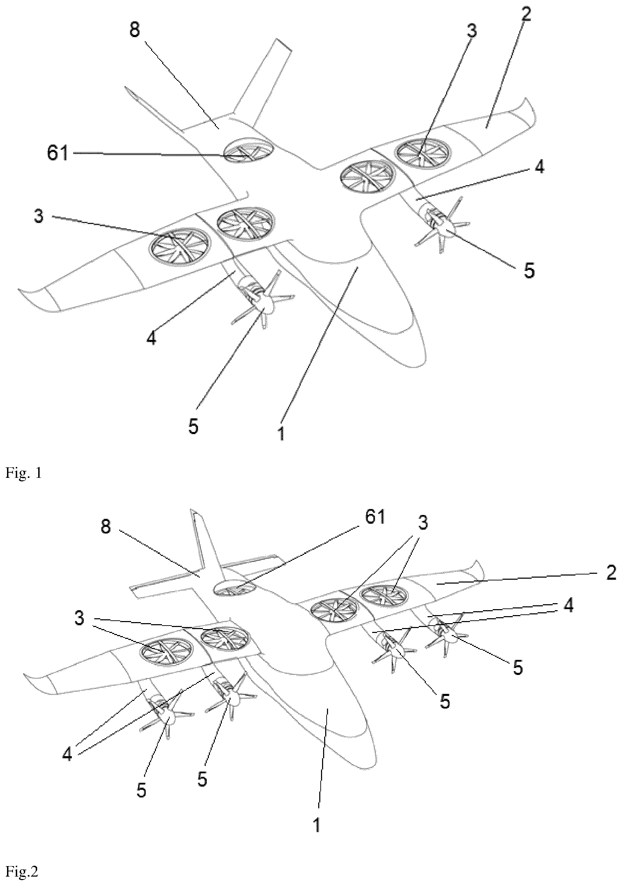

Increasing the number of open propellers on the pylons from two to four (for example, as depicted herein in Figures 2, 3 and 4) further increases this advantage. Following the same logic, the disc loading is lowered to 112 kg/m² on average (57 % lower than the ducted-fan-only vertical propulsion), because of the increased total propeller area. When the same thrust is required from each ducted fan and open propeller, the energy requirements are 241 kW for all ducted fans and 160 kW for all open propellers. That is 401 kW in total, a 23 % reduction compared to the aircraft which powers vertical flight solely by ducted fans.

Adding an additional ducted fan in the fuselage (for example, as depicted in Figures 1, 2 and 3) further improves energy efficiency. Even when considering a smaller diameter of this ducted fan, for example 1.2 m, the energy needs come to 28 kW for the extra fan, 163 kW for the ducted fans in the wing and 199 kW for the open propellers, resulting in 390 kW total. That is 25 % reduction compared to the aircraft which powers vertical flight solely by ducted fans in the wing.

Although this example was calculated for a 2000 kg aircraft, the same logic can be applied to other weights and sizes resulting in the same or very similar percentage improvements.

In comparison to prior art VTOLs relying on a plurality of (tiltable) open propellers, which may be represented by a known VTOL according to US 10,365,036, the present invention using ducted fans integrated in the wing has a higher lift to drag ratio and the duct and the surrounding wing structure provide additional lift based on coanda effect which accelerates the stream in boundary layer. In the configuration of the present invention, the ducted fans provide an improved efficiency of vertical takeoff performance (for a comparable area of propellers and fans), because the duct reduces losses and provides additional lift. The VTOL of the present invention also has a reduced noise level due to the ducts. Furthemore, by using tiltable open propellers, the present invention allows using one motor for both vertical and horizontal flight mode, which results in a lower total weight of the aircraft.

When compared to prior art VTOLs relying solely on ducted fans integrated in the wing in combination with (tiltable) ducted fans mounted on the fuselage, the present invention has a higher efficiency and a significantly lower power consumption. During the cruise flight, some fans can normally be turned off, as cruise flight requires a much lower thrust than vertical flight. Non-titable open propellers when switched off can be aligned with the cruise flight direction and produce a low drag.

Tilting some of the open propellers and using them to power horizontal flight provides additional airflow on the wing. Open propellers have generally less aerodynamical drag than tiltable ducted fans when used in horizontal flight.

The aircraft of the present invention thus has at least four ducted fans, and at least two tiltable open propellers, and at least one additional vertical flight powering means. The ducted fans are integrated in the wing, the tiltable open propellers are located forwards of the leading edge of the wing, and the additional vertical flight powering means are located behind the trailing edge of the wing. This type and spatial distribution of the flight powering means is particularly suitable to achieve a stabilized flight with the above-listed advantages and to fulfil safety requirements imposed by aviation safety agencies.

To this end, it is particularly advantageous to have at least one open propeller in each quadrant, or two open propellers in two front quadrants and one ducted fan and/or one open propeller close to the axis (or in the axis) between the two rear quadrants. A higher number of open propellers or ducted fans may be used to provide additional redundancy.

Calculations of the inventors have shown that using less than four ducted fans would provide a substantially suboptimal solution. Using only two ducted fans for providing a sufficient hover power would require ducted fans of a huge size which would require an impractical depth of the wing. Furthermore, in case of failure of the ducted fan on one side, the open propellers on that side of the wing would need to replace the lost thrust of the ducted fan which would either require a dangerously high propeller tip speed in the emergency case or too low (suboptimal) propeller tip speed in normal operation. Four ducted fans provide a balance between a sufficient and effective thrust and acceptable requirements for their integration into the wing. A higher number of ducted fans may further add to the said balance, as well as provide additional redundancy.

The powering of the aircraft of the present invention may be provided by any suitable power system, such as fuel engine(s), electric motor(s), hybrid engine(s), fuel cells etc. In some embodiments, the ducted fans and the open propellers are powered by electric motors. Due to the effectiveness of the arrangement of ducted fans and open propellers according to the present invention, the total energy required to power the aircraft is relatively low which makes it suitable for electric powering.

### Brief description of Figures

Fig. 1 shows a schematic representation of an example of a VTOL aircraft according to the present invention.
Fig. 2 shows a schematic representation of a modified version of the aircraft according to Fig. 1.
Fig. 3 shows a schematic representation of another example of a VTOL aircraft according to the present invention.
Fig. 4 shows a schematic representation of yet another example of a VTOL aircraft according to the present invention.

### Detailed description of the invention

The present invention is further described in more detail with reference to the figures. The figures merely illustrate examples of the described embodiments, but they are not intended to limit the scope of the invention or of the described embodiments.

In some embodiments, an example of which is shown in Fig. 1, the VTOL aircraft of the invention has a fuselage 1 with a tail 8 and a wing 2. The aircraft has four ducted fans 3 in the wing 2, and two tiltable open propellers 5 provided on pylons 4 forwards of the leading edge of the wing 2. The pylons do not extend behind the trailing edge of the wing 2. The aircraft is further provided with an additional vertical flight powering means in the form of a ducted fan 61 integrated within the fuselage in its rear/tail part, behind the trailing edge of the wing 2.

Thus, there are two open propellers 5, each in one quadrant, and the ducted fan 61 is positioned in the axis between the two remaining quadrants, as can be seen on Fig. 1.

The ducted fans 3 are preferably arranged in one line along the wingspan of the wing 2. The ducted fans 3 are arranged horizontally within the wing, i.e., the axes of rotation of the fans are perpendicular to the wing 2, and the cylindrical ducts are integrated within the wing 2.

During vertical flight or hovering, the ducted fans 3, together with the ducted fan 61 and the tiltable open propellers 5 tilted into their vertical flight powering position (second position), provide the vertical thrust. During cruise flight, ducted fans 3 and 61 are closed (e.g., by movable or folding closing surfaces), and the open propellers 5 tilted into their horizontal flight powering position (first position) power the horizontal flight.

Fig. 2 shows a modified version of this embodiment. The VTOL aircraft has a fuselage 1 with a tail 8 and a wing 2 provided in the upper part of the fuselage 1. Four ducted fans 3 are integrated within the wing 2, with axes of rotation substantially perpendicular to the plane of the wing 2. An additional vertical flight powering means in the form of a ducted fan 61 integrated in the rear part of the fuselage 1 is provided.

Four tiltable open propellers 5 are provided on four pylons 4. The open propellers 5 are located forwards of the leading edge of the wing 2, and the pylons 4 do not extend behind the trailing edge of the wing 2.

Thus, even with four pylons, the aerodynamic properties of the aircraft are still excellent.

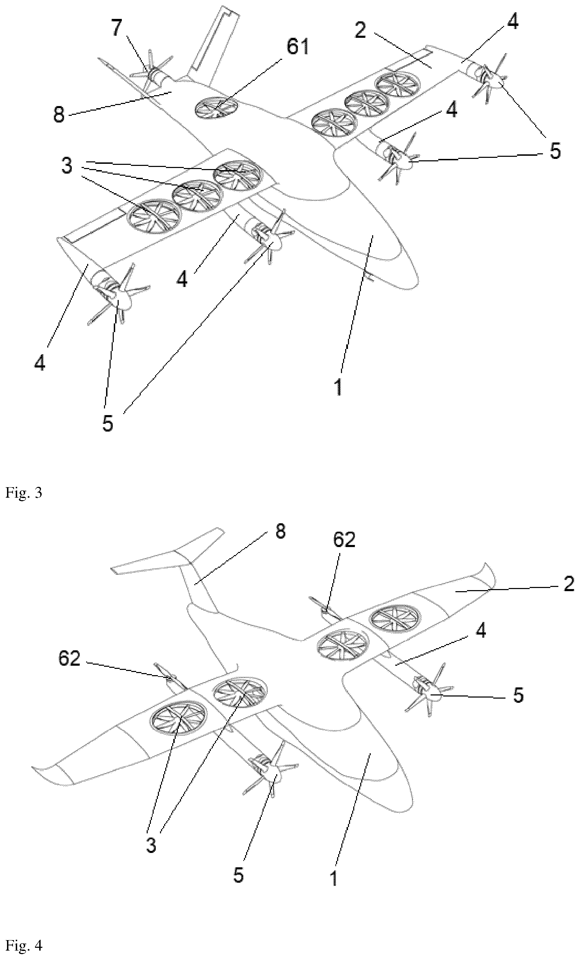

Fig. 3 shows an example of an embodiment with six ducted fans, four tiltable open propellers and two additional vertical flight powering means. The VTOL aircraft shown in Fig. 3 has a fuselage 1 with a tail 8 and a wing 2 attached to the fuselage 1 in its upper part. Six ducted fans 3 are integrated in the wing 2, with axes of rotation substantially perpendicular to the plane of the wing 2.

Additional vertical flight powering means have the form of a ducted fan 61 in the tail/rear part of the fuselage 1, and a tiltable open propeller 7 in the push configuration.

In this embodiment, four pylons 4 are provided on the wing 2, symmetrically about the fuselage. The pylons 4 extend forwards of the leading edge of the wing 2, but do not extend behind the trailing edge of the wing 2. Each pylon 4 carries on its tip one tiltable open propeller 5.

During vertical flight or hovering, the ducted fans 3, together with the ducted fan 61 and the tiltable open propellers 5 and 7 tilted into their vertical flight powering position (second position), provide the vertical thrust. During cruise flight, ducted fans 3 and 61 are closed (e.g., by movable or folding closing surfaces), and the open propellers 5 and 7 tilted into their horizontal flight powering position (first position) power the horizontal flight.

Fig. 4 shows an embodiment with another possible type of additional vertical flight powering means. The VTOL aircraft has a fuselage 1 with a tail 8 and a wing 2. The aircraft has four ducted fans 3 integrated in the wing 2, and two tiltable open propellers 5 provided on pylons 4 forwards of the leading edge of the wing 2. The pylons in this embodiment extend behind the trailing edge of the wing 2.

The aircraft is further provided with an additional vertical flight powering means in the form of a non-tiltable open propellers 62 mounted on the pylons 4, behind the trailing edge of the wing 2. The pylons 4 extend behind the wing 2 just sufficiently to allow mounting of the open propellers 62, in order to maintain very good aerodynamic properties.

Thus, there are two open propellers 5, each in one front quadrant, and two open propellers 62, each in one rear quadrant of the aircraft, as can be seen on Fig. 4.

As in the previous embodiments, the ducted fans 3 are arranged in one line along the wingspan of the wing 2. The ducted fans 3 are arranged horizontally within the wing, i.e., the axes of rotation of the fans are perpendicular to the wing 2, and the cylindrical ducts are integrated within the wing 2.

During vertical flight or hovering, the ducted fans 3, together with the ducted fan 61 and the tiltable open propellers 5 tilted into their vertical flight powering position (second position), provide the vertical thrust. During cruise flight, ducted fans 3 and 61 are closed (e.g., by movable or folding closing surfaces), the open propellers 62 are aligned with the flight direction and with the longitudinal axes of the pylons 4, and the open propellers 5 are tilted into their horizontal flight powering position (first position) power the horizontal flight.

In all shown embodiments, the flight powering means (ducted fans and open propellers) are arranged symmetrically about the plane which contains the longitudinal axis of the fuselage and is perpendicular to the longitudinal axis of the wing. All ducted fans are non-tiltable.

## Claims

1. A vertical takeoff and landing aircraft having a fuselage (1) with a tail (8), a wing (2) fixedly attached to the fuselage (1), and at least two pylons (4) attached to the wing (2) and oriented in parallel with the horizontal flight direction, wherein
- at least four non-tiltable ducted fans (3) are provided in the wing (2), said non-tiltable ducted fans (3) are configured to power vertical flight and to be closed during cruise flight;
- a tiltable open propeller (5) is provided on each pylon (4), said tiltable open propeller (5) being located forwards of the leading edge of the wing (2);
- at least one additional vertical flight powering means, selected from an open propeller (62, 7) and a non-tiltable ducted fan (61), is provided in the fuselage (1) or on the pylons (4) or on the tail (8), wherein the at least one additional vertical flight powering means is positioned behind the trailing edge of the wing (2).

2. The vertical takeoff and landing aircraft according to claim 1, wherein the tiltable open propellers (5) are tiltable between a position with an axis of rotation of the propeller (5) parallel with the pylons (4) and a position with an axis of rotation of the propeller (5) perpendicular to the plane of the wing (2).

3. The vertical takeoff and landing aircraft according to any one of the preceding claims, wherein the fuselage (1) is positioned under the wing (2) and the wing (2) is attached to the upper part of the fuselage (1).

4. The vertical takeoff and landing aircraft according to any one of the preceding claims, wherein the ducted fans (3) are arranged horizontally within the wing (2), so that the axes of rotation of the fans (3) are substantially perpendicular to the wing (2), and cylindrical ducts of the ducted fans (3) are integrated within the wing (2).

5. The vertical takeoff and landing aircraft according to any one of the preceding claims, wherein the ducted fans (3) are arranged within the wing (2) substantially in one line along the wingspan.

6. The vertical takeoff and landing aircraft according to any one of the preceding claims, wherein the total area of the ducted fans (3) integrated within the wing, relative to the total area of the wing, is in the range of 15 to 50 %, preferably in the range of 20 to 50 %.

7. The vertical takeoff and landing aircraft according to any one of the preceding claims, wherein the pylons (4) extend forwards of the leading edge of the wing (2) and extend at most to the trailing edge of the wing (2).

8. The vertical takeoff and landing aircraft according to any one of the preceding claims, which is provided with at least four pylons (4).

9. The vertical takeoff and landing aircraft according to any one of the preceding claims, wherein the additional vertical flight powering means located behind the trailing edge of the wing (2) are at least one non-tiltable ducted fan (61) integrated within the fuselage and/or at least one open propeller (62) provided on each pylon and/or an open propeller (7) located on the tail (8).

10. The vertical takeoff and landing aircraft according to claim 9, wherein the additional vertical flight powering means located behind the trailing edge of the wing (2) is a non-tiltable ducted fan (61) provided in the fuselage (1) and arranged horizontally, so that the axis of rotation of the fan (61) is substantially perpendicular to the wing (2) plane, and the cylindrical duct of the ducted fan (61) is integrated within the fuselage (1).

11. The vertical takeoff and landing aircraft according to claim 9, wherein the additional vertical flight powering means located behind the trailing edge of the wing (2) are non-tiltable open propellers (62) provided on each pylon (4).

12. The vertical takeoff and landing aircraft according to claim 9, wherein the additional vertical flight powering means is a tiltable or non-tiltable open propeller (7) provided on the tail (8) of the aircraft.

13. The vertical takeoff and landing aircraft according to any one of the preceding claims, wherein the total number of ducted fans (3, 61) in the aircraft is 4 or 5 or 6 or 7 or 8 or 9 or 10 or 11, preferably 5 or 7.

14. The vertical takeoff and landing aircraft according to any one of the preceding claims, wherein the ducted fans (3, 61) and the open propellers (5, 62, 7) are powered by electric motors.

## Patentansprüche

1. Senkrechtstartendes und -landendes (VTOL) Flugzeug mit einem Rumpf (1) mit einem Leitwerk (8), einem fest mit dem Rumpf (1) verbundenen Flügel (2) und mindestens zwei mit dem Flügel (2) verbundenen Pylonen (4), wobei die Pylonen (4) parallel zur horizontalen Flugrichtung ausgerichtet sind,
worin
- im Flügel (2) sind mindestens vier nicht kippbare Kanalventilatoren (3) vorgesehen, wobei die nicht kippbaren Kanalventilatoren (3) so konfiguriert sind, dass sie den Vertikalflug antreiben und während des Reiseflugs geschlossen sind;
- an jedem Pylon (4) ist ein kippbarer, offener Propeller (5) vorgesehen, wobei sich der kippbare, offene Propeller (5) vor der Vorderkante des Flügels (2) befindet;
- im Rumpf (1) oder an den Pylonen (4) oder am Leitwerk (8) mindestens ein zusätzlicher Vertikalflugantrieb, ausgewählt aus einem offenen Propeller (62, 7) und einem nicht kippbaren Kanalventilator (61), vorgesehen ist (8), wobei das mindestens ein zusätzlicher Vertikalflugantrieb hinter der Hinterkante des Flügels (2) positioniert ist.

2. Senkrechtstartendes und -landendes Flugzeug nach Anspruch 1, wobei die kippbaren offenen Propeller (5) kippbar sind zwischen einer Position mit einer Drehachse des Propellers (5) parallel zu den Pylonen (4) und einer Position mit einer Drehachse des Propellers (5) senkrecht zur Ebene des Flügels (2).

3. Senkrechtstartendes und -landendes Flugzeug nach einem der vorhergehenden Ansprüche, wobei der Rumpf (1) unter dem Flügel (2) positioniert ist und der Flügel (2) am oberen Teil des Rumpfes (1) befestigt ist.

4. Senkrechtstartendes und -landendes Flugzeug nach einem der vorhergehenden Ansprüche, wobei die Kanalventilatoren (3) horizontal innerhalb des Flügels (2) angeordnet sind, so dass die Drehachsen der Kanalventilatoren (3) im Wesentlichen senkrecht zu dem Flügel (2) verlaufen und zylindrische Kanäle der Kanalventilatoren (3) in den Flügel (2) integriert sind.

5. Senkrechtstartendes und -landendes Flugzeug nach einem der vorhergehenden Ansprüche, wobei die Kanalventilatoren (3) innerhalb des Flügels (2) im Wesentlichen in einer Linie entlang der Flügelspannweite angeordnet sind.

6. Senkrechtstartendes und -landendes Flugzeug nach einem der vorhergehenden Ansprüche, wobei die Gesamtfläche der im Flügel integrierten Kanalventilatoren (3) im Verhältnis zur Gesamtfläche des Flügels im Bereich von 15 bis 50 liegt %, vorzugsweise im Bereich von 20 bis 50 %.

7. Senkrechtstartendes und -landendes Flugzeug nach einem der vorhergehenden Ansprüche, wobei sich die Pylone (4) vor der Vorderkante des Flügels (2) erstrecken und höchstens bis zur Hinterkante des Flügels (2) reichen.

8. Senkrechtstartendes und -landendes Flugzeug nach einem der vorhergehenden Ansprüche, das mit mindestens vier Pylonen (4) ausgestattet ist.

9. Senkrechtstartendes und -landendes Flugzeug nach einem der vorhergehenden Ansprüche, wobei die zusätzlichen Vertikalflugantriebe, die sich hinter der Hinterkante des Flügels (2) befinden, mindestens ein nicht kippbarer im Rumpf integrierter Kanalventilator (61) sind, und/oder mindestens ein offener Propeller (62) an jedem Pylon und/oder ein offener Propeller (7) am Leitwerk (8) sind.

10. Senkrechtstartendes und -landendes Flugzeug nach Anspruch 9, wobei der zusätzliche Vertikalflugantrieb hinter der Hinterkante des Flügels (2) ein im Rumpf (1) vorgesehener nicht kippbarer Kanalventilator (61) ist, der horizontal angeordnet ist, so dass die Drehachse des Ventilators (61) im Wesentlichen senkrecht zur Ebene des Flügels (2) verläuft und der zylindrische Kanal des Kanalventilators (61) in den Rumpf (1) integriert ist.

11. Senkrechtstartendes und -landendes Flugzeug nach Anspruch 9, wobei die zusätzlichen Vertikalflugantriebe, die sich hinter der Hinterkante des Flügels (2) befinden, nicht kippbare offene Propeller (62) sind, die an jedem Pylon (4) vorgesehen sind.

12. Senkrechtstartendes und -landendes Flugzeug nach Anspruch 9, wobei der zusätzliche Vertikalflugantriebeein kippbarer oder nicht kippbarer offener Propeller (7) ist, der am Leitwerk (8) des Flugzeugs vorgesehen ist.

13. Senkrechtstartendes und -landendes Flugzeug nach einem der vorhergehenden Ansprüche, wobei die Gesamtzahl der Kanalventilatoren (3, 61) im Flugzeug vorzugsweise 4 oder 5 oder 6 oder 7 oder 8 oder 9 oder 10 oder 11 ist, vorzugsweise 5 oder 7.

14. Senkrechtstartendes und -landendes Flugzeug nach einem der vorhergehenden Ansprüche, wobei die Kanalventilatoren (3, 61) und die offenen Propeller (5, 62, 7) durch Elektromotoren angetrieben werden.

## Revendications

1. Avion à décollage et atterrissage verticaux comportant un fuselage (1) avec une queue (8), une aile (2) fixée de manière fixe au fuselage (1), et au moins deux pylônes (4) fixés à l'aile (2) et orienté parallèlement à la direction horizontale du vol,
où
- au moins quatre ventilateurs carénés non inclinables (3) sont prévus dans l'aile (2), lesdits ventilateurs carénés non inclinables (3) sont configurés pour propulser un vol vertical et pour être fermés pendant le vol de croisière;
- une hélice ouverte inclinable (5) est prévue sur chaque pylône (4), ladite hélice ouverte inclinable (5) étant située en avant du bord d'attaque de l'aile (2) ;
- au moins un moyen de propulsion de vol vertical supplémentaire, choisi parmi une hélice ouverte (62, 7) et un ventilateur caréné non inclinable (61), est prévu dans le fuselage (1) ou sur les pylônes (4) ou sur la queue (8), où le au moins un moyen de propulsion de vol vertical supplémentaire est positionné derrière le bord de fuite de l'aile (2).

2. Aéronef à décollage et atterrissage verticaux selon la revendication 1, où les hélices ouvertes inclinables (5) sont inclinables entre une position d'axe de rotation de l'hélice (5) parallèle aux pylônes (4) et une position d'axe de rotation de l'hélice (5) perpendiculaire au plan de l'aile (2).

3. Aéronef à décollage et atterrissage verticaux selon l'une quelconque des revendications précédentes, où le fuselage (1) est positionné sous l'aile (2) et l'aile (2) est fixée à la partie supérieure du fuselage (1).

4. Aéronef à décollage et atterrissage verticaux selon l'une quelconque des revendications précédentes, où les ventilateurs carénés (3) sont disposés horizontalement à l'intérieur de l'aile (2), de sorte que les axes de rotation des ventilateurs (3) sont sensiblement perpendiculaires à l'aile (2) et les conduits cylindriques des ventilateurs carénés (3) sont intégrés à l'intérieur de l'aile (2).

5. Aéronef à décollage et atterrissage verticaux selon l'une quelconque des revendications précédentes, où les ventilateurs carénés (3) sont disposés à l'intérieur de l'aile (2) sensiblement selon une ligne le long de l'envergure.

6. Aéronef à décollage et atterrissage verticaux selon l'une quelconque des revendications précédentes, où la surface totale des ventilateurs carénés (3) intégrés à l'intérieur de l'aile, par rapport à la surface totale de l'aile, est comprise dans la gamme de 15 et 50 %, de préférence dans la gamme de 20 à 50 %.

7. Aéronef à décollage et atterrissage verticaux selon l'une quelconque des revendications précédentes, où les pylônes (4) s'étendent vers l'avant du bord d'attaque de l'aile (2) et s'étendent au maximum jusqu'au bord de fuite de l'aile (2).

8. Aéronef à décollage et atterrissage verticaux selon l'une quelconque des revendications précédentes, qui est pourvu d'au moins quatre pylônes (4).

9. Aéronef à décollage et atterrissage verticaux selon l'une quelconque des revendications précédentes, où les moyens de propulsion verticale supplémentaires situés derrière le bord de fuite de l'aile (2) sont au moins un ventilateur caréné non inclinable (61) intégré au fuselage et/ou au moins une hélice ouverte (62) prévue sur chaque pylône et/ou une hélice ouverte (7) située sur la queue (8).

10. Aéronef à décollage et atterrissage verticaux selon la revendication 9, où le moyen de propulsion vertical supplémentaire situé derrière le bord de fuite de l'aile (2) est un ventilateur caréné non inclinable (61) prévu dans le fuselage (1) et disposée horizontalement, de sorte que l'axe de rotation du ventilateur (61) soit sensiblement perpendiculaire au plan de l'aile (2), et le conduit cylindrique du ventilateur caréné (61) est intégré au fuselage (1).

11. Aéronef à décollage et atterrissage verticaux selon la revendication 9, où les moyens de propulsion verticale supplémentaires situés derrière le bord de fuite de l'aile (2) sont des hélices ouvertes non inclinables (62) prévues sur chaque pylône (4).

12. Aéronef à décollage et atterrissage verticaux selon la revendication 9, où le moyen de propulsion de vol vertical supplémentaire est une hélice ouverte (7) inclinable ou non, prévue sur la queue (8) de l'avion.

13. Aéronef à décollage et atterrissage verticaux selon l'une quelconque des revendications précédentes, où le nombre total de ventilateurs carénés (3, 61) dans l'aéronef est de 4 ou 5 ou 6 ou 7 ou 8 ou 9 ou 10 ou 11, de préférence 5 ou 7.

14. Aéronef à décollage et atterrissage verticaux selon l'une quelconque des revendications précédentes, où les ventilateurs carénés (3, 61) et les hélices ouvertes (5, 62, 7) sont alimentés par des moteurs électriques.
